# EUROPEAN PATENT APPLICATION

(11) **EP 2 224 390 A1**
(43) Date of publication of application: **01.09.2010**
(21) Application number: 08710696.9
(22) Date of filing: 25.01.2008
(51) Int. Cl.: G06Q 30/00, G06Q 10/00, G06Q 20/00

(54) **SERVICE POINT ISSUANCE RETURN SYSTEM**

(30) Priority: 16.11.2007 JP 2007298323
(71) Applicant: Culture Convenience Club Co., Ltd., Osaka 530-0001 (JP)
(72) Inventor: MASUDA, Muneaki, Osaka-shi Osaka 530-0001 (JP)
(74) Representative: Nunnenkamp, Jörg
(86) International application number: PCT/JP2008/051599
(87) International publication number: WO 2009/063652

(57) **Abstract**

The invention presents a service point issue and return system capable of expanding the service point issue and return cycle autonomously by customers, and enhancing the distribution value of service points.

The service point issue and return system includes a management server 1 for managing fluctuations of point values comprehensively, enterprise member terminals 2 provided at enterprise members having means for inquiring about customer member information by way of the management server and communication circuits and providing offering and spending information of point values, and customer terminals 3 connected to the management server by way of communication circuits, and further includes point value moving means for adding or subtracting point values for moving point values accumulated in point value accounts assigned for each customer in the point database stored in the management server 1, between point value accounts of plural customers depending on the instructions from the customer terminals 3.

## Description

### Technical Field

The present invention relates to a service point issue and return system, and more particularly to a system for allowing to exchange service points between customers spending the service points.

### Technical Background

Hitherto, at retail shops selling and presenting merchandise or service, they have been offering service point issue and return systems for managing service points issued and returned to customers depending on the purchase amount of merchandise or service transaction for the purposes of promoting sales and attracting and fixing customers. Among them, there are systems participated by a plurality of membership enterprises or membership customers, for example as disclosed in patent document 1, in which a new member presents an introduction card storing customer information to the service provider, and the service provider reads out the customer information of the introducing member from the recording medium, and returns the service to the existing introducing member. Patent document 2 discloses other system, in which points are issued individually by a plurality of enterprise groups, and points of plural types gained by the customer in each enterprise group or retail shop are summed up, and the summed points can be spent at any retail shop of the membership enterprises.
Patent document 1: Japanese Unexamined Patent Application Publication No. 2006-139388
Patent document 2: Japanese Unexamined Patent Application Publication No. 2007-272525

### Disclosure of the Invention

### Problem to be Solved by the Invention

However, the system disclosed in patent document 1 is a system merely intended to gain points when an existing member introduces a new member, but the new member enjoys no merit, and in order that a new member is actually enrolled, the introduced customer must carry the card to the point-issuing shop, and actually receive the service. Therefore, it was difficult to establish a service point issue and return cycle among enterprises and customers. The system disclosed in patent document 2 is a system for summing up plural points of different kinds issued by different membership enterprises, and it is advantageous for expanding the usable scope of service points, but the membership enterprises must pay the service point issue costs, and the same as in the invention disclosed in patent document 1, it was difficult to establish a service point issue and return cycle.

The problem to be solved by the invention is to present a service point issue and return system capable of expanding the service point issue and return cycle autonomously by customers, and enhancing the distribution value of service points. More specifically, the service points acquired by the customer at the existing shop or virtual shop on the Internet can be presented as gift to other intended customer at will, and the distribution value of the points can be enhanced, and the gift activity of a customer may lead to enrollment of a new customer, it is intended to present a service point issue and return system in which purchase promoting effects are enhanced between the gift giving customer member and the gift receiving customer member.

### Means for Solving Problem

To achieve the object, the invention relates to a service point issue and return system executed by a computer-readable program for managing service points issued and returned to the customers depending on the purchase amount of merchandise or service transaction, including a management server for managing fluctuations of point values comprehensively, enterprise member terminals provided at enterprise members having means for inquiring about customer member information by way of the management server and communication circuits and providing offering and spending information of point values, and customer terminals connected to the management server by way of communication circuits, and further including point value moving means for adding or subtracting point values for moving point values accumulated in point value accounts assigned for each customer in the point database stored in the management server, between point value accounts of plural customers depending on the instructions from the customer terminals.

The point value moving means has point value specifying means for specifying point values desired by a donor customer giving a gift from the point values accumulated in the point value account of the donor customer, and point value reception authorizing means for a recipient customer to authorize that the point values specified by the donor customer should be accumulated in the point account of the recipient customer, and further has means for subtracting automatically the point values specified by the donor customer from the point value account of the donor customer according to the reception authorization from the recipient customer terminal, and adding automatically the point values subtracted from the point value account of the donor customer to the point value account of the recipient customer.

The point value moving means further has point value specifying means for specifying point values desired by a donor customer giving a gift from the point values accumulated in the point value account of the donor customer, reception authorizing information issuing means for issuing information for reception authorization by a recipient customer to the donor customer, transmitting means for urging the recipient customer to authorize reception, point value reception authorizing means for the recipient customer to authorize that the point values specified by the donor customer should be accumulated in the point account of the recipient customer, and means for subtracting automatically the point values specified by the donor customer from the point value account of the donor customer according to the reception authorization from the recipient customer terminal, and adding automatically the point values subtracted from the point value account of the donor customer to the point value account of the recipient customer.

The point value moving means further has point value specifying means for specifying point values desired by a donor customer giving a gift from the point values accumulated in the point value account of the donor customer, recipient customer specifying means for specifying the recipient customer to receive the point values, transmitting means for urging the recipient customer to authorize reception, point value reception authorizing means for the recipient customer to authorize that the point values specified by the donor customer should be accumulated in the point account of the recipient customer, and means for subtracting automatically the point values specified by the donor customer from the point value account of the donor customer according to the reception authorization from the recipient customer terminal, and adding automatically the point values subtracted from the point value account of the donor customer to the point value account of the recipient customer.

The transmitting means is an electronic mail transmitted and received between the donor customer and the recipient customer.

The transmitting means is an electronic mail transmitted from the management server to the recipient customer.

The transmitting means is display to the own screen of the recipient customer.

The information transmitted by the transmitting means includes password information for enabling authorization of point value reception.

The system also includes means for transmitting a reception notice to the donor customer automatically when the recipient customer authorizes the reception of the point values.

The management server stores customer authentication means, and the customer information authenticated by the customer authentication means a member ID, an electronic mail address, or terminal identification information registered in the customer terminal.

The management server stores screen display means for displaying a screen accessible for the recipient customer selectively, and when the recipient customer is identified to be a member customer having a member ID of the service point issue and return system, the reception authorization screen is displayed at the recipient customer terminal, and if the recipient customer is identified to be a non-member customer not having a member ID of the service point issue and return system, a membership enrollment screen is displayed.

### Effects of the Invention

The invention presents a service point issue and return system executed by a computer-readable program for managing service points issued and returned to the customers depending on the purchase amount of merchandise or service transaction, including a management server for managing fluctuations of point values comprehensively, enterprise member terminals provided at enterprise members having means for inquiring about customer member information by way of the management server and communication circuits and providing offering and spending information of point values, and customer terminals connected to the management server by way of communication circuits, and further including point value moving means for adding or subtracting point values for moving point values accumulated in point value accounts assigned for each customer in the point database stored in the management server, between point value accounts of plural customers depending on the instructions from the customer terminals, and therefore the customer can present point values usable at enterprise members to a friend easily and free of charge, or may receive gift point values easily from a friend. The enterprise members receive more customers coming to shop for using the point values presented by the gift giving deed of customers, or may gain new member customers. Hence, sales promotion activities without spending cost can be realized, and the issue cost of service points can be saved. The management server (management center) can enhance the value of points because the points are distributed by gift giving deeds of customers. Aside from offering and spending of point values of enterprise members, the point values are also changed by gift giving deeds of customers, and if the point values are not changed for a specific period, points are invalidated, but such point invalidation rate can be suppressed, and the enrollment of member customers may be stably maintained. Therefore, the cycle of service among three parties, that is, enterprise members, customers, and management server, functions normally and is not interrupted, and distribution of points and promotion of sales are encouraged.

The point value moving means has point value specifying means for specifying point values desired by a donor customer giving a gift from the point values accumulated in the point value account of the donor customer, and point value reception authorizing means for a recipient customer to authorize that the point values specified by the donor customer should be accumulated in the point account of the recipient customer, and further has means for subtracting automatically the point values specified by the donor customer from the point value account of the donor customer according to the reception authorization from the recipient customer terminal, and adding automatically the point values subtracted from the point value account of the donor customer to the point value account of the recipient customer, and therefore the donor customer can freely specify the amount of point values to be gifted, and the recipient customer can select whether or not to receive the point values, and for the donor customer, the point values are not subtracted unless the recipient customer authorizes the reception, and the present may be given without waste.

The point value moving means further has point value specifying means for specifying point values desired by a donor customer giving a gift from the point values accumulated in the point value account of the donor customer, reception authorizing information issuing means for issuing information for reception authorization by a recipient customer to the donor customer, transmitting means for urging the recipient customer to authorize reception, point value reception authorizing means for the recipient customer to authorize that the point values specified by the donor customer should be accumulated in the point account of the recipient customer, and means for subtracting automatically the point values specified by the donor customer from the point value account of the donor customer according to the reception authorization from the recipient customer terminal, and adding automatically the point values subtracted from the point value account of the donor customer to the point value account of the recipient customer, and therefore the donor customer can choose a friend as a recipient customer at will, and present desired point values, and the recipient customer can receive the points values easily and safely at will. The recipient customer can enjoy a direct gift from the friend with comfort and happiness, and for the donor customer, the point values are not subtracted unless the recipient customer authorizes the reception, and the present may be given without waste. For the enterprise members and the management server, it is enough to issue reception authorization information for the recipient customer to authorize reception to the donor customer, and the network between customers such as electronic mails exchanged between customers without access to the management server functions as the transmitting means for urging reception authorization of the system, and the management server does not have to identify the recipient customer until the recipient customer authorizes the reception of point values on the basis of the reception authorization information. That is, the requirement of personal information such as electronic mail address of recipient customer may be limited to a minimum limit, and the customer may disclose only the minimum limit of personal information.

The point value moving means further has point value specifying means for specifying point values desired by a donor customer giving a gift from the point values accumulated in the point value account of the donor customer, recipient customer specifying means for specifying the recipient customer to receive the point values, transmitting means for urging the recipient customer to authorize reception, point value reception authorizing means for the recipient customer to authorize that the point values specified by the donor customer should be accumulated in the point account of the recipient customer, and means for subtracting automatically the point values specified by the donor customer from the point value account of the donor customer according to the reception authorization from the recipient customer terminal, and adding automatically the point values subtracted from the point value account of the donor customer to the point value account of the recipient customer, and therefore the reception authorization may be directly urged to the recipient customer by the transmitting means from the management server. Hence, the recipient customer can easily receive the gift of point values, and the management server gains new customer information.

The transmitting means is an electronic mail transmitted and received between the donor customer and the recipient customer, and therefore instead of the electronic mail from the management server or enterprise member, the reception information can be described in the electronic mail exchanged between customers, and the recipient customer can safely receive point values from an acknowledged donor customer.

The transmitting means is an electronic mail transmitted from the management server to the recipient customer, and therefore the donor customer can present point values without having to sending an own electronic mail, and the point values can be gifted easily.

The transmitting means is display to the own screen of the recipient customer, and therefore more recipient customers are expected to log in the system, and the customers can read other information displayed on the screen.

The information transmitted by the transmitting means includes password information for enabling authorization of point value reception, and therefore the point values can be exchanged more safely.

The system also includes means for transmitting a reception notice to the donor customer automatically when the recipient customer authorizes the reception of the point values, and therefore the donor customer can know the reception of point values by the recipient customer securely and promptly.

The management server stores customer authentication means, and the customer information authenticated by the customer authentication means a member ID, an electronic mail address, or terminal identification information registered in the customer terminal, and therefore the customer can be authenticated appropriately, and the point values can be exchanged more safely.

The management server stores screen display means for displaying a screen accessible for the recipient customer selectively, and when the recipient customer is identified to be a member customer having a member ID of the service point issue and return system, the reception authorization screen is displayed at the recipient customer terminal, and if the recipient customer is identified to be a non-member customer not having a member ID of the service point issue and return system, a membership enrollment screen is displayed, and therefore if the customer desired by the donor customer to present point values is a non-member, the non-member can readily enter the membership of the service point issue and return system, and new member customers are enrolled for the management server and enterprise members.

### Brief Description of the Drawings

Fig. 1 is a schematic diagram of service point issue and return system in an embodiment of the invention.
Fig. 2 is a flowchart of a first embodiment of the invention.
Fig. 3 is a flowchart of a second embodiment of the invention.
Fig. 4 is a flowchart of a third embodiment of the invention.
Fig. 5 is a flowchart of a fourth embodiment of the invention.

### Description of Reference Numerals

- 1: Management server
- 2: Enterprise member terminal
- 3: Customer terminal
The Best Mode for Carrying Out the Claimed Invention

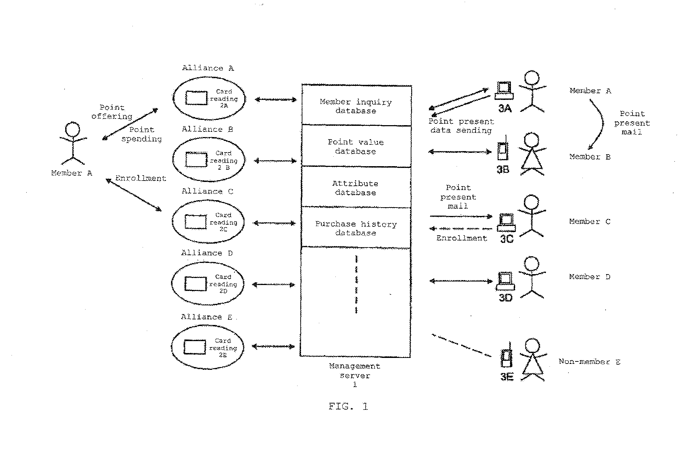

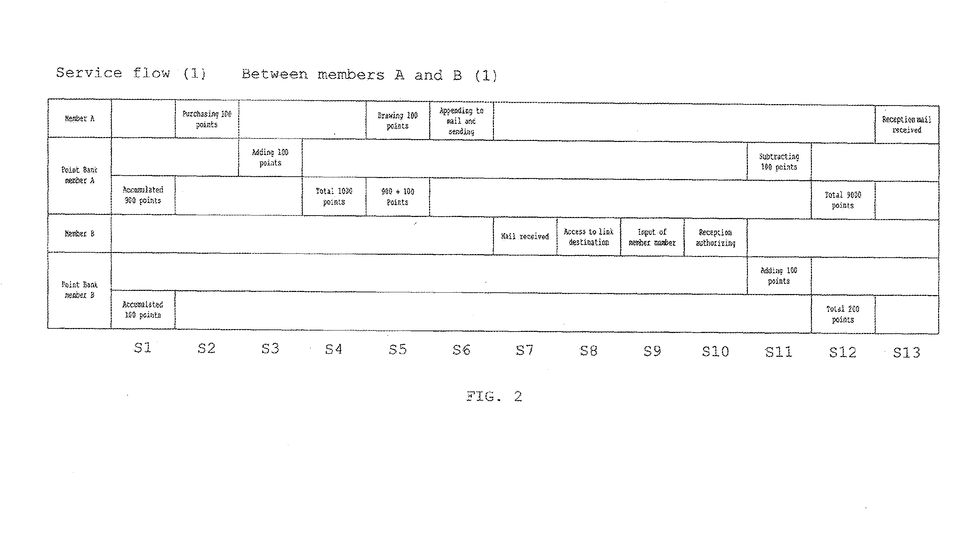

Fig. 1 is a schematic diagram of service point issue and return system of the invention, and Fig. 2 to Fig. 5 are flowcharts of the service point issue and return system of the invention. The configuration of the service point issue and return system includes, as shown in Fig. 1, a management server 1 for managing fluctuations of point values comprehensively, enterprise member terminals 2 provided at enterprise members for inquiring about customer member information by way of the management server 1 and communication circuits and providing offering and spending information of point values, and customer terminals 3 connected to the management server by way of communication circuits.

In the invention, the enterprise member terminal 2 is an enterprise member terminal directly installed in the shop of the enterprise member having a function of reading magnetic stripes, a member information inquiry terminal for inquiring by manual input of member's number, or an input and output device composed of hard disk, monitor, keyboard and others at a member enterprise having a virtual shop on the Internet, and it is usually installed at a plurality of subscribed enterprise members. In particular, the enterprise member terminal 2 directly installed in the shop may have its function added to a cash register. The communication circuits to the management server 1 may be the Internet, or an exclusive line for transmitting between servers. The transmission system includes, for example, HULFT or TCP/IP. The transmission function may also incorporate a security assuring device or a network repeater.

The management server 1 stores a member inquiry database for inquiring customer members, and a point database for managing point values, and also stores others as required, such as an attribute database for storing attribute information of customer members, a purchase history database for managing customer information, and a recommend database for recommending attracting merchandise or service presented by enterprise members depending on the attribute or purchase history of customer members. These databases may be stored in one server machine, or stored in separately stored in server machines, which may be logically linked by circuits.

In the point database stored in the management server 1, point value accounts assigned for individual member IDs owned by customers are built up, and variations of point value are managed in each member ID or by logically linking with the member inquiry database.

The customer terminal 3 is an input and output terminal owned by the customer, and is a communication terminal composed of hard disk, monitor, keyboard and others, or a mobile communication terminal such as portable telephone, and it is connected to the management server 1 by way of LAN or Internet or other network.

First, the system and operation between the enterprise member terminal 2 and the management server 1 are explained. When a customer member purchase merchandise or service by showing a member card carrying a member ID of 9 digits or 16 digits, the enterprise member terminal reads the member ID, and immediately inquires the management server 1 about the customer member information via the customer information inquiry means, and transmits the offering information of point values corresponding to the purchased amount to the management server 1. Or when a member purchases merchandise or service by spending the already gained points by showing the member card carrying the member ID, the member ID is read, and the customer management information is simultaneously inquired to the management server 1, and the spending information of point values corresponding to the purchased amount is transmitted to the management server. Preferably, the purchase amount should be processed into point value information according to specific logics at each member enterprise terminal and transmitted to the management server 1, but once the purchase amount may be transmitted to the management server 1, and converted into point values in the point value converting means provided in the management server 1.

At this time, the management server 1 adds or subtracts the point values by the point value adding and subtracting means on the basis of the information transmitted from the member enterprise terminal 2, and varies the point values by adding or subtracting point values in the point value account assigned for each member ID provided in the point database. That is, when the point value offering information is transmitted from the enterprise member terminal 2, new point values are added to the point values accumulated in the point value account of the corresponding customer, or when the point value spending information is transmitted from the enterprise member terminal 2, the spent point values are subtracted from the point values accumulated in the point value account of the corresponding customer. As required, the management server 1 may be also provided with new account opening means, and when a new customer is enrolled, the member ID is assigned to the customer, and a point value account is assigned corresponding to the member ID.

Meanwhile, the system and operation between the customer terminal 3 and the management server 1 are explained below, in which the point values accumulated in the point value account assigned to each member ID in the point database provided in the management server 1 are moved between point value accounts of plural customers according to the point value offering instruction from the customer terminal 3 by point value moving means, by subtracting automatically the point values from the point value account of the donor customer of point values, and adding automatically the subtracted point values to the point value account of the recipient customer of point values. In first point value moving means of the simplest configuration, the donor customer specifies the desired gift point values, and designates the recipient customer, and the corresponding point values are subtracted automatically from the point value account of the donor customer, and the same point values are automatically added to the point value account of the recipient customer.

Second point value moving means includes point value specifying means used by the donor customer to specify the desired gift point values from the point values accumulated in the point value account of the donor customer, and point value reception authorizing means used by the recipient donor to authorize accumulation of the point values specified by the donor customer in the point value account of the recipient customer, and the reception authorization signal from the recipient customer terminal is recognized, and the corresponding point values are automatically subtracted from the point value account of the donor customer, and the corresponding point values are automatically added to the point value account of the recipient customer.

In third point value moving means, transmitting means is built outside of the management server 1, and, for example, when the donor customer specifies by point value specifying means of desired gift from the point values accumulated in the point value account of the donor customer on a donor customer exclusive screen logging into the system through customer authentication means, reception authorization information issue means issues URL or password as reception authorization information used by the recipient customer to authorize the reception. The recipient customer knowing the gift of point values logs in the system, and the reception is authorized by the reception authorizing means that the point values specified by the donor customer should be accumulated in the point value account of the recipient customer, and this signal of reception authorization is recognized by the management server, and the point values specified by the donor customer are automatically subtracted from the point value account of the donor customer, and the point values subtracted from the point value account of the donor customer are automatically added to the point value account of the recipient customer.

In fourth point value moving means, transmitting means is built inside of the management server 1, or in a system of the management server 1, and, for example, when the donor customer specifies by point value specifying means of desired gift from the point values accumulated in the point value account of the donor customer on a donor customer exclusive screen logging into the system through customer authentication means, also specifies a desired recipient customer of point values through recipient customer specifying means by entering the member ID or electronic mail address of the recipient customer. This operation is recognized by the management server 1, and transmitting means for urging the recipient customer to authorize the reception sends an electronic mail or display on the recipient customer's screen that point values are gifted. The recipient customer knows the gift of point values through electronic mail or the like logs in the system, or the recipient knows the gift of point values by display on the screen after logging in, and then authorizes reception by the reception authorizing means that the point values specified by the donor customer should be accumulated in the point value account of the recipient customer, and this signal of reception authorization is recognized by the management server, and the point values specified by the donor customer are automatically subtracted from the point value account of the donor customer, and the point values subtracted from the point value account of the donor customer are automatically added to the point value account of the recipient customer.

A first embodiment of the invention is described below by referring to Fig. 1 and the flowchart in Fig. 2. In the first embodiment, member A is a donor customer of point values, member B is a recipient customer of point values, and they are both member customers of the service point issue and return system having own member ID, and the service flow shows the gift of point values of member A to member B.

In initial state, 900 points are accumulated in the point value account of member A, and 100 points are accumulated in the point value account of member B (S1). Member A purchases merchandise or service at alliance A, one of the enterprise members, and shows a member card, and alliance A reads the member card by its customer enterprise terminal 2A, and inquires about the customer to the management server 1, and presents point value offering information of 100 points to the management server 1 (S2). At the management server 1, 100 points are added to accumulated 900 points in the point value account of member A (S3), and the total of point values of the point value account of member A is 1000 points (S4). Then, member A logs into the system from the customer terminal 3A to display member A exclusive screen, and enters on the screen to draw 100 points from 1000 points in the point value account of member A, and URL, together with password as required, of recipient customer site is issued to member A as reception authorization information (S5). Member A sends an electronic mail together with the issued URL and password to member B (S6). Member B receiving the electronic mail (S7) accesses the recipient customer site (S8), and logs into the system (S9), and enters, for example, password and authorizes reception of point values (S1). The management server recognizes the signal of this reception authorization, and subtracts automatically 100 points from the accumulated points of the point value account of member A, and adds 100 points to the accumulated points of the point value account of member B (S11). As a result, 900 points are accumulated in the point value account of member A, and 200 points are accumulated in the point value account of member B (S12). Further, the management server 1 recognizing the signal of reception authorization sends a reception notice electronic mail to member A (S13). Meanwhile, if the member ID or customer terminal identification information includes the function of password, issuing or appending of password may not be always necessary.

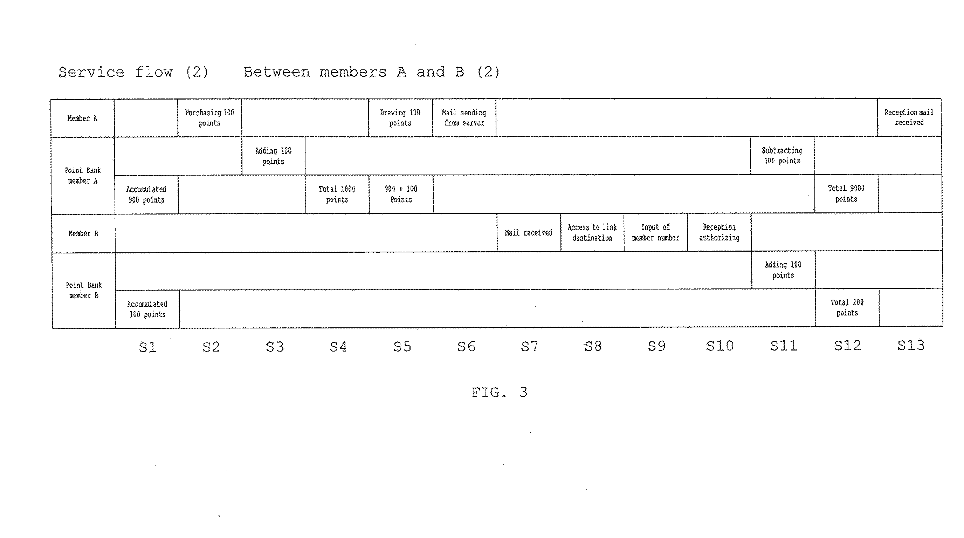

A second embodiment of the invention is described below by referring to Fig. 1 and the flowchart in Fig. 3. In the second embodiment, member A is a donor customer of point values, member B is a recipient customer of point values, and they are both member customers of the service point issue and return system having own member ID, and the service flow shows the gift of point values of member A to member B.

In initial state, 900 points are accumulated in the point value account of member A, and 100 points are accumulated in the point value account of member B (S1). Member A purchases merchandise or service at alliance A, one of the enterprise members, and shows a member card, and alliance A reads the member card by its customer enterprise terminal 2A, and inquires about the customer to the management server 1, and presents point value offering information of 100 points to the management server 1 (S2) At the management server 1, 100 points are added to accumulated 900 points in the point value account of member A (S3), and the total of point values of the point value account of member A is 1000 points (S4). Then, member A logs into the system from the customer terminal 3A to display member A exclusive screen, and enters on the screen to draw 100 points from 1000 points in the point value account of member A, and also enters the information for specifying member B to select member B as recipient of point values, for example, member ID or electronic mail address of member B (S5). The management server recognizes the input from member A, and transmits the information stating that point values are gifted from member A to member B by electronic mail. Member B receives the electronic mail (S7), and accesses the recipient customer site (S8), logs into the system (S9), and authorizes reception of point values (S10). The management server recognizes the signal of reception authorization, and subtracts automatically 100 points from the accumulated points of the point value account of member A, and adds 100 points to the accumulated points of the point value account of member B (S11). As a result, 900 points are accumulated in the point value account of member A, and 200 points are accumulated in the point value account of member B (S12). Further, the management server 1 recognizing the signal of reception authorization sends a reception notice electronic mail to member A (S13).

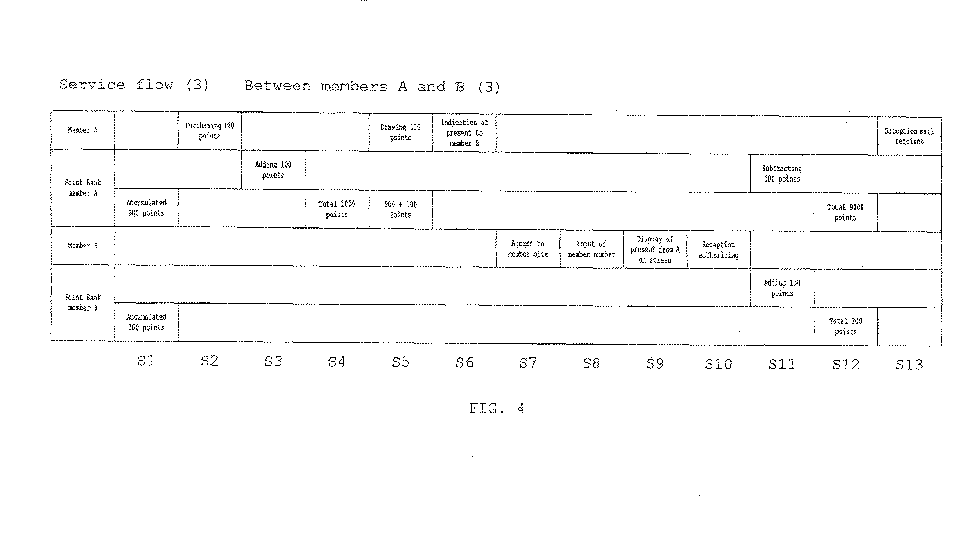

A third embodiment of the invention is described below by referring to Fig. 1 and the flowchart in Fig. 4. In the third embodiment, member A is a donor customer of point values, member B is a recipient customer of point values, and they are both member customers of the service point issue and return system having own member ID, and the service flow shows the gift of point values of member A to member B.

In initial state, 900 points are accumulated in the point value account of member A, and 100 points are accumulated in the point value account of member B (S1). Member A purchases merchandise or service at Internet shop of alliance A, one of the enterprise members, and enters a member ID, and alliance A inquires about the customer to the management server 1 on the basis of the member ID, and presents point value offering information of 100 points to the management server 1 (S2). At the management server 1, 100 points are added to accumulated 900 points in the point value account of member A (S3), and the total of point values of the point value account of member A is 1000 points (S4). Then, member A logs into the system from the customer terminal 3A to display member A exclusive screen, and enters on the screen to draw 100 points from 1000 points in the point value account of member A, and also enters the information for specifying member B to select member B as recipient of point values, for example, member ID or electronic mail address of member B, or selects member B if already enrolled in the member network (S5). The management server 1 recognizes the instruction from member A (S6). On the other hand, member B accesses the system (S7), logs into the system from customer terminal 3B to display member B exclusive screen (S8), and the member B exclusive screen shows a display, for example, saying "You have a gift of 100 points from member A" (S9). Member B clicks a button "Authorize reception" and authorizes reception of point values (S10). The management server recognizes the signal of reception authorization, and subtracts automatically 100 points from the accumulated points of the point value account of member A, and adds 100 points to the accumulated points of the point value account of member B (S11). As a result, 900 points are accumulated in the point value account of member A, and 200 points are accumulated in the point value account of member B (S12). Further, the management server recognizing the signal of reception authorization sends a reception notice electronic mail to member A (S13).

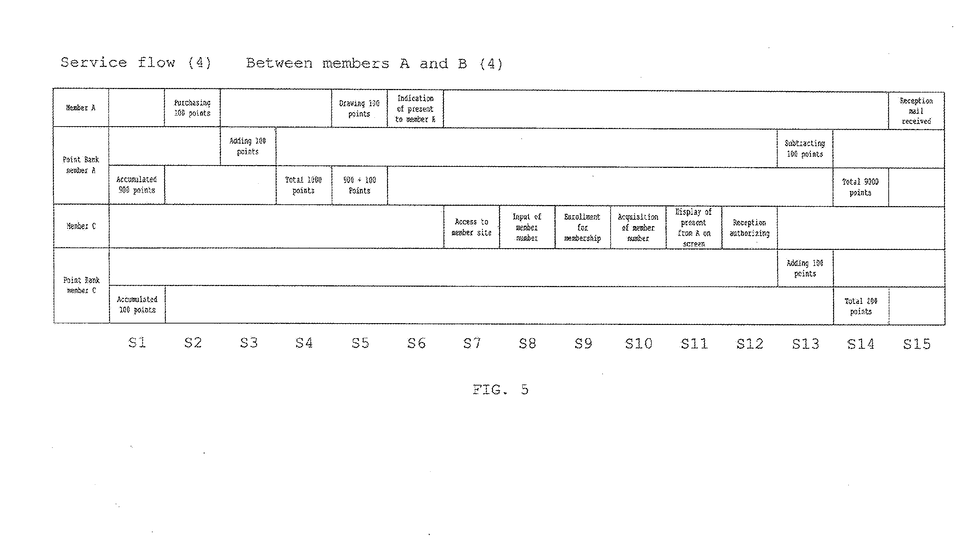

A fourth embodiment of the invention is described below by referring to Fig. 1 and the flowchart in Fig. 5. In the fourth embodiment, member A is a donor customer of point values and is a member customer of the service point issue and return system, and member C is a recipient customer of point values but is a non-member of the service point issue and return system, and the service flow shows the gift of point values of member A to non-member C.

In initial state, 900 points are accumulated in the point value account of member A, and 100 points are accumulated in the point value account of member B (S1). Member A purchases merchandise or service at alliance A, one of the enterprise members, and shows a member card, and alliance A reads the member card by its customer enterprise terminal 2A, and inquires about the customer to the management server 1, and presents point value offering information of 100 points to the management server 1 (S2). At the management server 1, 100 points are added to accumulated 900 points in the point value account of member A (S3), and the total of point values of the point value account of member A is 1000 points (S4). Then, member A logs into the member A exclusive screen from the customer terminal 3A, and enters on the screen to draw 100 points from 1000 points in the point value account of member A, and the information used by the recipient customer to authorize reception, such as URL or password as required is applied to member A (S5). Member A appends the URL of the recipient customer site and password to the electronic mail, and sends the electronic mail to non-member C (S6). Non-member C receives the electronic mail (S7), and although an enrolled member can access the recipient customer site, enter the member ID and authorize the reception, for a non-member, a link is displayed for selecting whether or not to enter the membership of service point issue and return system (S8). If non-member C wishes to receive the point values, non-member C goes to an enrollment filing screen (S9), acquires the member ID (S10), enters the member ID to log in the system (S12), and authorizes the reception (S12). The management server recognizes the signal of reception authorization, and subtracts automatically 100 points from the accumulated points of the point value account of member A, and adds 100 points to a newly opened point value account of non-member C (S13). As a result, 900 points are accumulated in the point value account of member A, and 100 points are accumulated in the point value account of non-member C (S14). Further, the management server recognizing the signal of reception authorization sends a reception notice electronic mail to member A (S15). In the fourth embodiment, the transmitting means is an electronic mail between member A and non-member C, but when member A enters an electronic mail address of non-member C on the log-in screen, an electronic mail may be sent to non-member C from the management server.

Although not shown in the flowcharts in Fig. 2 to Fig. 4, member B receiving point values and non-member C enrolled as a member can spend the acquired point values at enterprise members, alliance A to alliance E, and can also offer gifts newly to other member D or non-member E. The invention is not intended to limit the number of member enterprises, number of customer members, and the configuration of management server of member enterprise terminals and customer terminals.

### Industrial Applicability

According to the invention, the customer can present point values usable at enterprise members to a friend easily and free of charge, or may receive gift point values easily from a friend. The enterprise members receive more customers coming to shop for using the point values presented by the gift giving deed of customers, or may gain new member customers. Hence, sales promotion activities without spending cost can be realized, and the issue cost of service points can be saved. The management server (management center) can enhance the value of points because the points are distributed by gift giving deeds of customers. Aside from offering and spending of point values of enterprise members, the point values are also changed by gift giving deeds of customers, and if the point values are not changed for a specific period, points are invalidated, but such point invalidation rate can be suppressed, and the enrollment of member customers may be stably maintained. Therefore, the cycle of service among three parties, that is, enterprise members, customers, and management server, functions normally and is not interrupted, and distribution of points and promotion of sales are encouraged.

## Claims

1. A service point issue and return system executed by a computer-readable program for managing service points issued and returned to the customers depending on the purchase amount of merchandise or service transaction, comprising:
a management server for managing fluctuations of point values comprehensively;
enterprise member terminals provided at enterprise members having means for inquiring about customer member information by way of the management server and communication circuits and providing offering and spending information of point values; and
customer terminals connected to the management server by way of communication circuits, further comprising:
point value moving means for adding or subtracting point values for moving point values accumulated in point value accounts assigned for each customer in the point database stored in the management server, between point value accounts of plural customers depending on the instructions from the customer terminals.

2. The service point issue and return system according to claim 1,
wherein the point value moving means, comprising:
point value specifying means for specifying point values desired by a donor customer giving a gift from the point values accumulated in the point value account of the donor customer;
point value reception authorizing means for a recipient customer to authorize that the point values specified by the donor customer should be accumulated in the point account of the recipient customer, and
means for subtracting automatically the point values specified by the donor customer from the point value account of the donor customer according to the reception authorization from the recipient customer terminal, and adding automatically the point values subtracted from the point value account of the donor customer to the point value account of the recipient customer.

3. The service point issue and return system according to claim 2,
wherein the point value moving means, comprising:
point value specifying means for specifying point values desired by a donor customer giving a gift from the point values accumulated in the point value account of the donor customer; reception authorizing information issuing means for issuing information for reception authorization by a recipient customer to the donor customer;
transmitting means for urging the recipient customer to authorize reception, point value reception authorizing means for the recipient customer to authorize that the point values specified by the donor customer should be accumulated in the point account of the recipient customer; and
means for subtracting automatically the point values specified by the donor customer from the point value account of the donor customer according to the reception authorization from the recipient customer terminal, and adding automatically the point values subtracted from the point value account of the donor customer to the point value account of the recipient customer.

4. The service point issue and return system according to claim 2,
wherein the point value moving means, comprising:
point value specifying means for specifying point values desired by a donor customer giving a gift from the point values accumulated in the point value account of the donor customer; recipient customer specifying means for specifying the recipient customer to receive the point values;
transmitting means for urging the recipient customer to authorize reception, point value reception authorizing means for the recipient customer to authorize that the point values specified by the donor customer should be accumulated in the point account of the recipient customer; and
means for subtracting automatically the point values specified by the donor customer from the point value account of the donor customer according to the reception authorization from the recipient customer terminal, and adding automatically the point values subtracted from the point value account of the donor customer to the point value account of the recipient customer.

5. The service point issue and return system according to claim 3 or 4,
wherein the transmitting means is an electronic mail transmitted and received between the donor customer and the recipient customer.

6. The service point issue and return system according to claim 3 or 4,
wherein the transmitting means is an electronic mail transmitted from the management server to the recipient customer.

7. The service point issue and return system according to claim 3 or 4,
wherein the transmitting means is display to the own screen of the recipient customer.

8. The service point issue and return system according to any one of claims 3 to 7,
wherein the information transmitted by the transmitting means includes password information for enabling authorization of point value reception.

9. The service point issue and return system according to any one of claims 1 to 8, further comprising:
means for transmitting a reception notice to the donor customer automatically when the recipient customer authorizes the reception of the point values.

10. The service point issue and return system according to any one of claims 1 to 9,
wherein the management server stores customer authentication means, and the customer information authenticated by the customer authentication means a member ID, an electronic mail address, or terminal identification
information registered in the customer terminal.

11. The service point issue and return system according to any one of claims 1 to 10,
wherein the management server stores screen display means for displaying a screen accessible for the recipient customer selectively, and when the recipient customer is identified to be a member customer having a member ID of the service point issue and return system, the reception authorization screen is displayed at the recipient customer terminal, and if the recipient customer is identified to be a non-member customer not having a member ID of the service point issue and return system, a membership enrollment screen is displayed.
